Europäisches Patentamt

European Patent Office

Office européen des brevets

(11) Publication number: **0 042 846**
**B1**

(12) **EUROPEAN PATENT SPECIFICATION**

(45) Date of publication of patent specification: **06.11.85**

(21) Application number: **81900070.4**

(22) Date of filing: **19.12.80**

(86) International application number:
**PCT/GB80/00222**

(87) International publication number:
**WO 81/01939 23.07.81 Gazette 81/17**

(51) Int. Cl.⁴: **A 01 F 12/44**

(54) **GRAIN SEPARATING APPARATUS.**

(30) Priority: **08.01.80 GB 8000500**
**30.07.80 GB 8024982**

(43) Date of publication of application:
**06.01.82 Bulletin 82/01**

(45) Publication of the grant of the patent:
**06.11.85 Bulletin 85/45**

(84) Designated Contracting States:
**DE FR SE**

(56) References cited:
**DE-A-2 112 565**
**FR-A- 306 589**
**FR-A- 606 518**
**GB-A-1 101 431**
**GB-A-1 184 542**
**GB-A-1 261 181**

(73) Proprietor: **MASSEY-FERGUSON SERVICES N.V.**
**Abraham de Veerstraat 7A**
**Curaçao Netherlands Antilles (NL)**
㊑ **DE SE**

(73) Proprietor: **MASSEY-FERGUSON S.A.**
**La Boursidiere, RN 186**
**F-92350 le Plessis Robinson (FR)**
㊑ **FR**

(72) Inventor: **McNAUGHT, James Baillie**
**16 Rue Diderot**
**St. Germain en Laye (FR)**

(74) Representative: **Jones, David Bryn**
**Massey-Ferguson Stareton near Kenilworth**
**Warwickshire CV8 2LJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical Field

This invention relates to apparatus for recovering grain from a mixture of grain and straw in a combine harvester.

In GB—A—1 101 431 we propose apparatus comprising a conveyor capable of conveying a mixture of grain and straw in a generally horizontal direction to a discharge end, and a chute arranged so that mixture discharged from the conveyor falls into the chute. The chute has a floor that is imperforate to the passage of grain through it and is downwardly included and projects beyond said discharge end in the feeding direction of the conveyor. A trough covered by a grille is provided at or adjacent to the lower end of the chute, and is adapted so that when the mixture of grain and straw passes down the chute, grain is collected by a trough and straw passes over it. A rotor is provided above and adjacent the rear end of the chute and is driven so as to assist the discharge of material from the apparatus.

It has been found that this known apparatus increases the efficiency of a combine harvester by increasing the amount of grain separated from the straw. However, it has also been found that the efficiency of this apparatus is reduced when harvesting bulky crops, such as rape and beans, that tends to form an entangled mass which accumulates above the rotor and can block the combine separating mechanism. The object of the present invention is to modify this known apparatus so that it can handle these bulky crops, thereby increasing grain separation efficiency and the crop flexibility of the combine to which it is fitted.

GB—A—1184542 also discloses grain recovering apparatus in a combine harvester comprising a rotor that feeds crop over a grille. The positions of the rotor and grille are fixed, but the tines of the rotor are made angularly adjustable to avoid wrapping of long straw around the tines.

### Disclosure of the Invention

According to the present invention, apparatus for recovering grain from a mixture of grain and straw in a combine harvester comprises a conveyor capable of conveying a mixture of grain and straw in a generally horizontal direction to a discharge end; a chute arranged so that said mixture discharged from the conveyor falls onto the chute, the chute having a floor that is imperforate to the passage of grain through it and is downwardly inclined and projects beyond said discharge end in the feeding direction of the conveyor; a trough covered by a grille provided at or adjacent to the lower end of the chute and adapted so that when the mixture of grain and straw passes down the chute grain is collected by the trough and straw passes over it; and a rotor provided above and adjacent to the rear end of the chute and driven so as to assist the discharge of material from the apparatus, characterised in that the rotor is carried between the lower ends of a pair of downwardly extending arms that are pivotally supported at their upper ends so as to allow the rotor to be swung backwards and forwards between a number of different settings relative to the chute and grille so as to vary the space therebetween for different types of crop and crop conditions, the rotor being driven by a drive mechanism comprising an upper pulley or wheel that is rotatable about said upper pivot axis and a lower drive pulley or wheel that is co-axial with the axis of the rotor, the two drive pulleys or wheels being coupled so that an input drive to the upper pulley serves to drive the lower pulley, and a drive coupling being provided between the lower pulley and the rotor.

It will be appreciated that the drive coupling is the only drive component that needs to be disengaged to allow adjustment of the rotor. The input drive to the upper pulley can remain permanently engaged because its position is fixed at the upper pivot axis of the rotor support arms.

Preferably, the drive coupling takes the form of an axially insertable spindle that keys the lower pulley and rotor together.

Preferably, an adjustment arm is mounted alongside one of the rotor support arms so as to pivot with said arm about the same upper pivot axis and carries both the upper and lower pulleys or wheels. Conveniently, a grip or handle is provided on the lower end of the adjustment arm by which the setting of the rotor can be charged.

### Description of the Drawings

The invention is now described by way of example with reference to the accompanying drawings in which:—

*Figure 1* is a side elevation of a combine harvester fitted with grain recovering apparatus according to the invention,

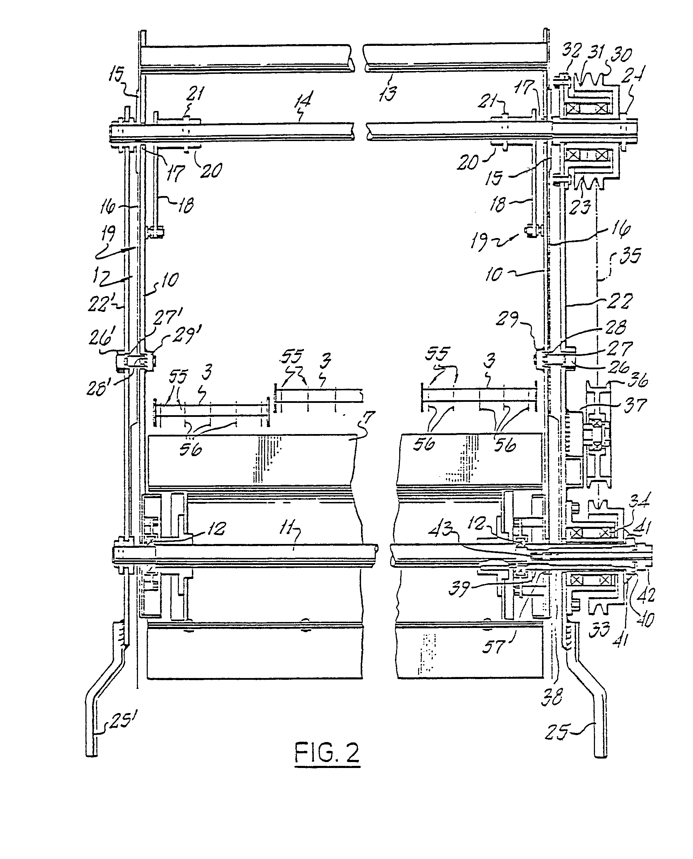

*Figure 2* is a rear view of the apparatus of Figure 1, and

Figure 3 is an elevation of the opposite side of the combine harvester to that shown in Figure 1.

### Best Mode of Carrying Out Invention

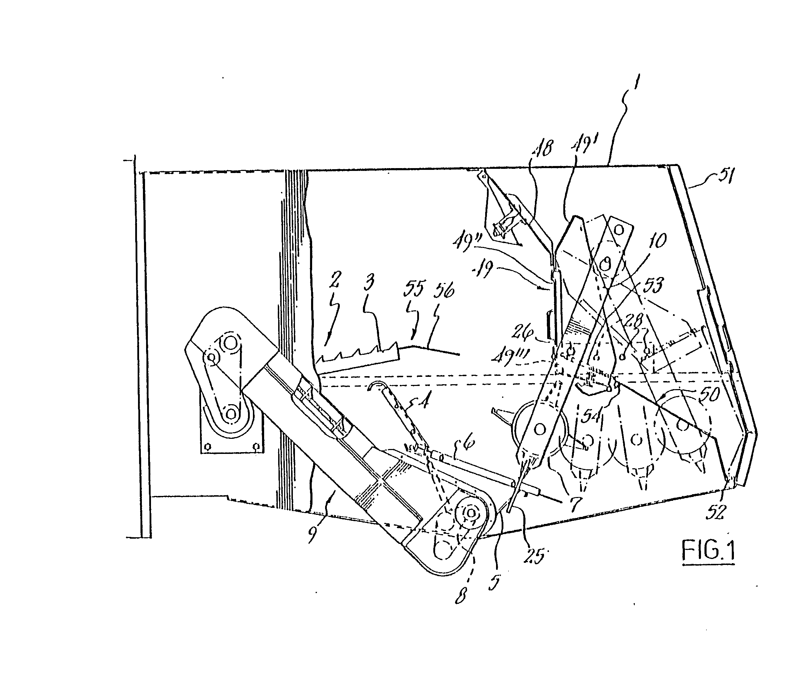

The drawings show the rear housing 1 of the combine harvester containing a straw walker mechanism 2 that receives crop from a crop threshing mechanism (not shown) and feeds it rearwards. Loose grain in the threshed crop material falls through the straw walkers 3 and is passed to a grain cleaning mechanism (not shown) while the straw passes over the end of the straw walkers 3 into a further grain separating mechanism comprising a chute 4 leading down to a trough 5 covered by a grille formed by a wire comb 6, and a rotor 7 provided adjacent the rear end of the chute 4. The straw falls onto the chute 4 and passes down over the wire comb 6 and is fed out of the housing 1 with the aid of the rotor 7 that is driven counterclockwise as seen in Figure 1. As the straw falls, loose grain is further released from the straw and passes through the comb 6 into the trough from where it is removed by a cross auger 8 and passes via a paddle elevator 9 to the grain cleaning mechanism. The apparatus as described so far is known from GB—A—1 101 431.

The rotor 7 is carried between the lower ends of a pair of downwardly extending arms 10 that are pivotally connected to the housing 1 at their upper ends so as to allow the rotor to be swung backwards and forwards relative to the chute 4 and comb 6 between a number of different settings. Figure 1 shows the rotor in full lines in its forwardmost setting and in broken lines in its rearmost setting and intermediate settings.

An important function of the rotor is to ensure a uniform thickness of the material fed over the comb 6. Adjustment of the setting of the rotor relative to the comb allows this thickness to be adjusted for maximum grain separation as well as for crop bulk to avoid blockages.

The shaft 11 of the rotor 7 is supported at each end in a bearing 12 connected to the respective rotor support arm 10. The upper ends of the arms 10 are also connected by tube 13 therebetween. The pivot of the arms 10 is formed by a shaft 14 that is rotatable in plane bearing plates 15 connected to the outside of the side walls 16 of the housing 1. The shaft 14 passes through apertures 17 in the arms 10 and is connected to each arm by a plate 18 that is fastened to the arm below the shaft at 19 and carries a sleeve 20 through which the shaft 14 passes and which is keyed to the shaft by a tapered pin 21.

A rotor adjustment arm 22 is connected to a sleeve 23 that is keyed by a tapered pin 24 to the outer end of the shaft 14 on the outside of the housing side wall 16. The adjustment arm 22 extends downwards alongside the adjacent rotor support arm 10 and carries a handle 25 at its lower end by which arms 10 and rotor 7 can be swung backwards and forwards to any desired setting. A releasable fastener 26 in the form of a screw is provided to secure the rotor in each of its settings, the screw 26 being inserted through an aperture 27 in the adjustment arm, one of a number of selected apertures 28 in the side wall 16 of the housing and engaging a nut 29 secured to the rotor support arm 10.

If desired a tapered body portion can be provided on the screw 26 so as to co-operate with the edges of the selected aperture 28 and give an angular self alignment action between the two arms 10 and 22.

An adjustment arm 22' is similarly provided on the opposite side of the rotor, together with a similar releasable fastener 26' to engage an aperture 27' in the adjustment arm and one of a number of corresponding apertures 28' in the wall 16 and a nut 29' secured to the adjustment rotor support arm 10.

The rotor drive mechanism comprises a V-belt pulley 30 that is concentric with the sleeve 23 and is supported by a bearing 31 connected through bolts 32 to the adjustment arm 22.

A V-belt pulley 33 is similarly supported at the lower end of the adjustment arm by a bearing 34 and a V-belt 35 couples both pulleys 30, 33 and is tensioned by a pulley 36 that is adjustably supported in a slotted guide 37 connected to the adjustment arm 22 between the two pulleys 30, 33.

A tubular spindle is insertable through the lower pulley 33, and apertures in the adjustment arm 22, side wall 16 and rotor support arm 10, and is engageable over a drive spigot 39 on the end of the shaft 11 of the rotor. The spigot 39 is shaped to key with the spindle 38, and a shaped head 40 on the spindle keys between lugs 41 provided on the pulley 33. A screw 42 is insertable through the spindle 38 and engages a threaded hole 43 in the spigot 39 to retain the spindle in place.

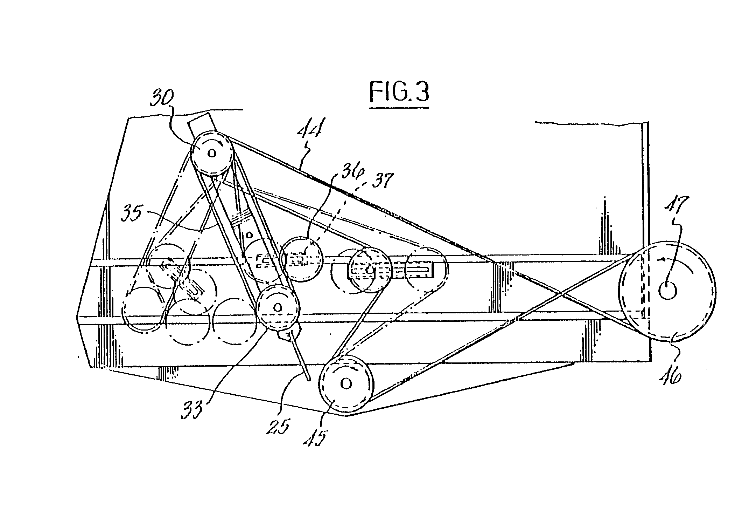

Figure 3 of the drawings is a side elevation showing the V-belt 35 passing over the pulleys 30, 33 and past the tensioner pulley 36. It also shows the input drive belt 44 that drives the upper pulley 30 and a pulley 45 connected to the grain collecting auger 8 and the elevator associated with the grain collecting chute 5. The main drive pulley 46 is driven from the crankshaft 47 that operates the straw walkers 2.

A crop deflector arrangement is provided within the housing 1 above the rotor 7 so as to deflect crop downwards to the rotor and prevent it from passing out of the combine over the top of the rotor. This deflector arrangement is made adjustable to accommodate the different settings of the rotor and to feed crop to the rotor in each case. As shown in Figure 1, an upper fixed baffle 48 is provided that extends downwards and rearwards from the top of the housing, and two relatively foldable baffles 49 and 50 are provided between the fixed baffle 48 and the rear wall 51 of the housing. The upper baffle 49 is located so as to pivot and slide relative to the lower edge of the fixed baffle 48, and the lower baffle 50 is pivoted about a transverse axis 52 adjacent the lower edge of the wall 51. A tension spring 53 holds these two baffles 49 and 50 in pivoting sliding engagement at 54 as they move between different settings corresponding to those of the rotor.

The baffle 49 is formed in three relatively angled sections 49', 49'' and 49''' so that the lower sections 49'', 49''' form a construction above the rotor in all of its settings. The upper section 49' lies above and behind the guide 48 in the forwardmost setting, and moves downwards and pivots rearwards to the rearmost setting. The lower baffle 50 simply swings rearwards towards the rear wall 51.

As shown in Figure 1, the rotor 7 and crop baffle arrangement is shown in its forwardmost position. To change this setting, the baffle 50 is released and swung rearwards about it axis 52 and secured in a new intermediate position or the rearmost position as shown in broken lines in Figure 1. Movement of the baffle 50 automatically causes the baffle 49 to move to a corresponding new position. The rotor drive is then disconnected by withdrawing the screw 42 and spindle 38 from the lower pulley 32. The rotor support arms 10 are released by removing the screws 26 at each side, and the rotor is then moved to its new intermediate position or rearmost position using the adjustment arms 22. In its new position the aperture 27 in each arm 22 is aligned with a corresponding one of the set of apertures 28 in the housing side wall 16, and the screw 26 is re-inserted to hold the arms and rotor in position. The drive can then be reconnected by re-inserting the spindle 38 and holding screw 42 through the pulley 32 and a corresponding one of a set of apertures 57 in the housing side wall 16.

In a modified arrangement the baffles 49 and 50 may be conveniently linked to the rotor support arms 10 so that movement of the baffles is linked directly with movement of the rotor.

As described above, the action of the straw in falling from the ends of the straw walkers 3 aids the release of threshed grain from the straw, this grain being collected in the trough 5. In order to further assist release of the threshed grain from the straw, a plurality of elongate elements 55 such as wire fingers are provided that are spaced laterally across the end of each straw walker 3 and project rearwards beyond the end of the straw walkers above the chute 4. Preferably, these fingers 55 are inclined downwards, at least over their end portions 56. These fingers 55 tend to cause additional loosening of the straw before it falls freely, and thereby assists release of the grain.

## Claims

1. Apparatus for recovering grain from a mixture of grain and straw in a combine harvester comprising a conveyor (2) capable of conveying a mixture of grain and straw in a generally horizontal direction to a discharge end; a chute (4) arranged so that said mixture discharged from the conveyor falls onto the chute, the chute having a floor that is imperforate to the passage of grain through it and is downwardly inclined and projects beyond said discharge end in the feeding direction of the conveyor; a trough (5) covered by a grille (6) provided at or adjacent to the lower end of the chute and adapted so that when the mixture of grain and straw passes down the chute grain is collected by the trough and straw passes over it: and a rotor (7) provided above and adjacent to the rear end of the chute and driven so as to assist the discharge of material from the apparatus, characterised in that the rotor (7) is carried between the lower ends of a pair of downwardly extending arms (10) that are pivotally supported at their upper ends (14) so as to allow the rotor (7) to be swung backwards and forwards between a number of different settings relative to the chute (4) and grille (6) so as to vary the space therebetween for different types of crop and crop conditions, the rotor (7) being driven by a drive mechanism comprising an upper drive pulley or wheel (30) that is rotatable about said upper pivot axis (14) and a lower drive pulley or wheel (33) that is co-axial with the axis of the rotor (7), the two drive pulleys or wheels (30, 33) being coupled so that an input drive (44) to the upper pulley (30) serves to drive the lower pulley (33), and a drive coupling (38) being provided between the lower pulley (33) and the rotor (7).

2. The apparatus as claimed in claim 1 characterised in that an adjustment arm (22) is mounted alongside one of the rotor support arms (10) so as to pivot with said arm about the same upper pivot axis (14) and carries both the upper and lower drive pulleys or wheels (30, 33).

3. Apparatus as claimed in claim 2 further characterised in that it includes a housing (1) having side walls (16) between which conveyor (2), chute (4), trough (5) and rotor (7) are mounted, the adjustment arms (22) being mounted outside the housing (1) alongside one side wall (16) and releasable connection means (26) being provided to secure the adjustment arm (22) in each of a number of selectable angular positions corresponding to different settings of the rotor (7) relative to the chute (4) and grille (6).

4. The apparatus as claimed in any one of the preceding claims characterised in that the drive coupling (38) takes the form of an axially insertable spindle that keys the lower pulley and rotor together.

5. Apparatus as claimed in any one of the preceding claims further characterised in that it includes a housing (1) within which the conveyor (2), chute (4), trough (5) and rotor (7) are mounted and which includes crop deflector means (48, 49, 50) that is adjustable with the rotor (7) and serves to direct crop from the conveyor (2) downwards to the rotor (7) so that the crop passes between the chute (4) and rotor (7) downwards out of the housing (1).

6. Apparatus as claimed in claim 5 further characterised in that the crop deflector means comprises two baffles (49, 50) that are relatively foldable about a transverse axis, the lower baffle (50) being pivoted about a transverse axis (52) along its lower edge and the upper baffle (49) being guided so as to move in a preset path with pivotal movement of the lower baffle (50).

7. Apparatus as claimed in claim 5 further characterised in that the upper baffle (49) is formed with two relatively angled portions (49″, 49‴) and is located so as to form a constriction above the rotor (7) in all of its settings.

8. Apparatus as claimed in any one of the preceding claims further characterised in that a plurality of elongate elements (55) are spaced laterally across the discharge end of the conveyor (2) and project beyond the end of the conveyor.

9. Apparatus as claimed in claim 8 further characterised in that the conveyor (2) comprises straw walkers (3) and the elongate elements wire fingers (55).

10. Apparatus as claimed in claim 8 or 9 further characterised in that the elongate elements (55) project downwards at least over a portion of their free ends (56).

## Patentansprüche

1. Vorrichtung zur Rückgewinnung der Körner aus einem Korn-/Strohgemisch in einem Mähdrescher, welche aus einer Fördereinrichtung (2) zum Fördern eines Korn-/Stroh-Gemisches in im allgemeinen horizontaler Richtung an ein Abwurfende besteht, einer Schütte (4), welche so angeordnet ist, dass das von der Fördereinrichtung abgeworfene Gemisch auf die Schütte fällt, die einen geschlossenen, für den Korndurchgang undurchlässigen Boden aufweist, der schräg nach unten gerichtet ist und sich über das Abwurfende hinaus in Förderrichtung der Fördereinrichtung erstreckt, einer von einer Roste (6) abgedeckten und nahe dem unteren Ende der Schütte vorgesehenen Wanne (5), so dass beim Abfluss des Korn-/Strohgemisches über die Schütte das Korn von der Wanne aufgenommen und das Stroh darüber hinweggeführt wird, sowie einem Rotor (7), der oberhalb von und nahe dem hinteren Ende der Schütte angeordnet ist und angetrieben wird, um den Abfluss des Materials aus der Vorrichtung zu unterstützen, dadurch gekennzeichnet, dass der Rotor (7) zwischen den unteren Enden eines Paars nach unten gerichteter Arme (10) getragen wird, die an ihren oberen Enden (14) schwenkbar gelagert sind, wodurch der Rotor (7) zwischen mehreren unterschiedlichen Stellungen nach vorn und hinten relativ zur Schütte (4) und zur Roste (6) schwenkbar und der Abstand dazwischen für unterschiedliche Getreidearten und Getreidebeschaffenheit veränderbar ist, wobei der Rotor (7) von einer Antriebsvorrichtung angetrieben wird, welche aus einer sich um die obere Schwenkachse (14) drehenden oberen Riemenscheibe oder einem Rad (30), sowie aus einer koaxial zur Rotorachse (7) angeordneten unteren Riemenscheibe oder Rad (33) besteht, wobei die beiden Riemenscheiben oder Räder (30, 33) derart miteinander gekoppelt sind, dass der Antrieb (44) der oberen Riemenscheibe (30) auch die untere Riemenscheibe (33) treibt und eine Antriebskupplung (38) zwischen der unteren Riemenscheibe (33) und dem Rotor (7) vorgesehen ist.

2. Vorrichtung nach Anspruch 1, dadurch gekennzeichnet, dass ein Einstellglied (22) längs einem der Rotortragarme (10) befestigt und mit dem Arm um die gleiche obere Schwenkachse (14) schwenkbar ist und sowohl die obere wie die untere Riemenscheibe bzw. Rad (30, 33) trägt.

3. Vorrichtung nach Anspruch 2, dadurch gekennzeichnet, dass ein Gehäuse (1) mit Seitenwänden (16) vorgesehen ist, zwischen denen die Fördereinrichtung (2), die Schütte (4), die Wanne (5) und der Rotor (7) angebracht sind, wobei das Einstellglied (22) ausserhalb des Gehäuses (1) längs einer Seitenwand (16) angeordnet ist und lösbare Verbindungen (26) das Einstellglied (22) in mehreren wahlweisen Winkelstellungen entsprechend den unterschiedlichen Einstellungen des Rotors (7) relativ zur Schütte (4) und zur Roste (6) festlegen.

4. Vorrichtung nach einem der vorhergehenden Ansprüche, dadurch gekennzeichnet, dass die Antriebskupplung (38) als achsial einrückbare Spindel ausgebildet ist, welche die untere Riemenscheibe mit dem Rotor verkeilt.

5. Vorrichtung nach einem der vorhergehenden Ansprüche, dadurch gekennzeichnet, dass ein Gehäuse (1) vorgesehen ist, in welchem die Fördereinrichtung (2), die Schütte (4), die Wanne (5) und der Rotor (7) angeordnet sind, und das Getreideablenkeinrichtungen (48, 49, 50) aufweist, welche mit dem Rotor (7) verstellbar sind und das Getreide von der Fördereinrichtung (2) nach unten zum Rotor (7) leiten, so dass es zwischen Schütte (4) und Rotor (7) nach unten aus dem Gehäuse (1) fällt.

6. Vorrichtung nach Anspruch 5, dadurch gekennzeichnet, dass die Getreideablenkeinrichtungen aus zwei um eine Querachse relativ zueinander klappbare Leitflächen (49, 50) bestehen, wobei die untere Leitfläche (50) un eine entlang ihere Unterkante verlaufende Querachse (52) schwekbar ist und die obere Leitfläche (49) so geführt wird, dass sie sich mit der Schwenkbewegung der unteren Leitfläche (50) auf einer einer festgelegten Bahnbewegt.

7. Vorrichtung nach Anspruch 5, dadurch gekennzeichnet, dass die obere Leitfläche (49) zwei relativ zueinander abgewinkelt Teile (49'', 49''') aufweist und derart angeordnet ist, dass sie eine Verengung oberhalb des Rotors (7) in allen seinen Stellungen bildet.

8. Vorrichtung nach einem der vorhergehenden Ansprüche, dadurch gekennzeichnet, dass mehrere langgestreckte Glieder (55) in seitlichen Abständen über dem Abwurfende der Fördereinrichtung (2) angeordnet sind und über das Ende der Fördereinrichtung hinausragen.

9. Vorrichtung nach Anspruch 8, dadurch gekennzeichnet, dass die Fördereinrichtung (2) aus Schüttlern (3) besteht und die langgestreckten Glieder aus Drahtzinken (55) gebildet sind.

10. Vorrichtung nach Anspruch 8 oder 9, dadurch gekennzeichnet, dass die langgestreckten Glieder (55) sich mit wenigstens einem Teil ihrer freien Enden (56) nach unten erstrecken.

## Revendications

1. Appareil pour la récupération du grain d'un mélange de grain et de paille dans une moissonneuse-batteuse, comprenant un convoyeur (2) capable de transporter un mélange de grain et de paille dans une direction sensiblement horizontale, jusqu'à une extrémité d'évacuation; un couloir de chute (4) disposé de sorte que le mélange évacué du convoyeur tombe sur le couloir, le couloir de chute comportant un plancher qui ne possède pas de perforations pour le passage du grain à travers lui et qui est incliné vers le bas et s'avance au-delà de ladite extrémité d'évacuation, dans la direction d'avance du convoyeur; une goulotte (5), recouverte d'une grille (6), prévue à l'extrémité inférieure du couloir de chute ou près de cette extrémité et conçue de sorte que, lorsque le mélange de grain et de paille descend du couloir, le grain est collecté par la goulotte et la paille passe au-dessus de celle-ci; et un rotor (7) prévu au-dessus et près de l'extrémité arrière du couloir de chute et entraîné de façon à aider à l'évacuation de la matière de l'appareil, caractérisé en ce que le rotor (7) est porté entre les extrémités inférieures d'une paire de bras (10), s'étendant vers le bas, qui sont supportés de façon pivotante à leurs extrémités supérieures (14) afin que le rotor (7) puisse pivoter vers l'arrière et l'avant entre une pluralité de positions de réglage différentes par rapport au couloir de chute (4) et à la grille (6), pour modifier l'espace entre ces éléments pour différents types de récolte et de conditions de récolte, le rotor (7) étant entraîne par un mécanisme d'entraînement comprenant une poulie ou roue d'entraînement supérieure (30), qui peut tourner autour dudit axe de pivot supérieur (14), et une poulie ou roue d'entraînement inférieure (33) qui est coaxiale à l'axe du rotor (7), les deux poulies ou roues d'entraînement (30, 33) étant reliées de sorte qu'une entrée motrice (44) à la poulie supérieure (30) sert à entraîner la poulie inférieure (33), et un accouplement d'entraînement (38) étant prévu entre la poulie inférieure (33) et le rotor (7).

2. Appareil suivant la revendication 1, caractérisé en ce qu'un bras de réglage (22) est monté le long d'un des bras (10) de support de rotor, de façon à pivoter avec ledit bras autour du même axe de pivot supérieur (14), et porte à la fois les poulies ou roue d'entraînement supérieure ou inférieure (30, 33).

3. Appareil suivant la revendication 2, caractérisé en ce qu'il comprend un caisson (1) comportant des parois latérales (16) entre lesquelles le convoyeur (2), le couloir de chute (4), la goulotte (5) et le rotor (7) sont montés, le bras de réglage (22) étant monté à l'extérieur du caisson (1) le long d'une paroi latérale (16) et des moyens de jonction libérable (26) étant prévus pour bloquer le bras de réglage (22) dans chacune d'une pluralité de positions angulaires choisies, correspondant à différentes positions de réglage du rotor (7) par rapport au couloir de chute (4) et à la grille (6).

4. Appareil suivant l'une quelconque des revendications précédentes, caractérisé en ce que l'accouplement d'entraînement (38) est constitué par une broche, insérable axialement, qui assure le clavetage mutuel de la poulie inférieure et du rotor.

5. Appareil suivant l'une quelconque des revendications précédentes, caractérisé en ce qu'il comprend un caisson (1), à l'intérieur duquel le convoyeur (2), le couloir de chute (4), la goulotte (5) et le rotor (7) sont montés, et qui comporte un dispositif déflecteur de récolte (48, 49, 50) qui est réglable avec le rotor (7) et sert à diriger la récolte venant du convoyeur (2) vers le bas, vers le rotor (7), de manière à que la récolte passe entre le couloir de chute (4) et le rotor (7) vers le bas, pour sortir du caisson (1).

6. Appareil suivant la revendication 5, caractérisé en ce que le dispositif déflecteur de récolte comprend deux déflecteurs (49, 50) qui sont articulés l'un par rapport à l'autre autour d'un axe transversal, le déflecteur inférieur (50) pouvant pivoter autour d'un axe transversal (52), le long de son bord inférieur, et le déflecteur supérieur (49) étant guidé de manière à se déplacer suivant un chemin prédéterminé lors du mouvement pivotant du déflecteur inférieur (50).

7. Appareil suivant la revendication 5, caractérisé en ce que le déflecteur supérieur (49) comprend deux parties (49'', 49'''), formant un angle l'une par rapport à l'autre, et est placé de manière à définir un étranglement au-dessus du rotor (7) dans toutes ses positions de réglage.

8. Appareil suivant l'une quelconque des revendications précédentes, caractérisé en ce qu'une pluralité d'éléments allongés (55) sont espacés latéralement sur toute la largeur de l'extrémité d'évacuation du convoyeur (2) et font saillie au-delà de l'extrémité du convoyeur.

9. Appareil suivant la revendication 8, caractérisé en ce que le convoyeur (2) comprend des dispositifs (3) d'avance pas-à-pas de la paille et en ce que les éléments allongés sont des doigts filiformes (55).

10. Appareil suivant la revendication 8 ou 9, caractérisé en ce que les éléments allongés (55) sont dirigés vers le bas au moins sur une partie de leurs extrémités libres (56).

FIG.1

FIG. 2

FIG.3